# EUROPÄISCHE PATENTSCHRIFT

(11) **EP 1 020 701 B1**
(45) Veröffentlichungstag und Bekanntmachung des Hinweises auf die Patenterteilung: **25.06.2003**
(21) Anmeldenummer: 99123051.7
(22) Anmeldetag: 20.11.1999
(51) Int. Cl.: G01B 3/06

(54) **Gliedermassstab mit einer zusätzlichen Messeinrichtung**
Folding ruler with additional measuring means
Mètre pliant avec moyens de mesure supplémentaires

(30) Priorität: 14.01.1999 CH 5699
(43) Veröffentlichungstag der Anmeldung: 19.07.2000
(73) Patentinhaber: Kunststoffwerk AG Buchs, 9470 Buchs (CH)
(72) Erfinder: Walser,Werner, 9472 Grabs (CH)
(74) Vertreter: Kulhavy, Sava V.

(56) Entgegenhaltungen:
- CH-A- 241 441
- DE-A- 19 630 702
- DE-U- 8 510 063
- US-A- 2 070 255
- US-A- 2 669 026
- US-A- 4 426 790

## Beschreibung

Die vorliegende Erfindung betrifft einen Gliedermassstab mit einer zusätzlichen Messeinrichtung, welche auf zumindest einem der ein Paket bildenden Gliederstäbe des Gliedermassstabes aufgesetzt ist, wobei die Messeinrichtung einen Schieber umfasst, welcher sich oberhalb des zumindest eines Gliederstabes befindet und welcher zwei Endflächen aufweist,

Gliedermassstäbe dieser Gattung sind bereits bekannt. Einer dieser bekannten Gliedennassstäbe ist in CH-PS 241 441 offenbart. Die Messeinrichtung dieses Gliedermassstabes umfasst einen Aufsatz, welcher auf eines der Glieder des Gliedermassstabes aufgesetzt ist.

Der Grundkörper dieses Aufsatzes umfasst einen hohlen Abschnitt, durch welchen ein zusätzliches Messglied hindurchgeht. Dieses Messglied trägt dieselbe Skala wie die Glieder des Gliedermassstabes. Der Grundkörper des Aufsatzes weist ferner zwei Schenkel auf, welche von den Seiten des hohlen Abschnittes des Aufsatzgrundkörpers herabhängen. Diese Schenkel sind federnd ausgeführt und sie erfassen seitlich das betreffende Glied des Gliedermassstabes. Der Aufsatz ist mit einem Fenster versehen, durch welchen man die Skala auf dem zusätzlichen Messglied beobachten kann. Das vom Gliedermassstab abstehende Ende des Messgliedes wird an der betreffenden Stelle des zu vermessenden Gegenstandes angeschlagen. Der Wert des Messgliedes, welcher im Fenster des Aufsatzes erscheint, wird danach zum Wert addiert, welcher vom Gliedermassstab abgelesen werden kann.

Ein weiterer Gliedermassstab der genannten Gattung ist US-PS 4 426 790 offenbart. Dieser Gliedermassstab unterscheidet sich vom vorstehend beschriebenen Gliedermassstab nur dadurch, dass der Grundkörper des Aufsatzkörpers anstelle der seitlichen Schenkel eine Hülse aufweist, durch welche das zusätzliche Messglied hindurchgeht.

Ein noch weiterer Gliedermassstab ist in DE-U 85 10063 offenbart. Dieser Gliedermassstab unterscheidet sich von den vorstehend beschriebenen und bekannten Gliedermassstäben dadurch, dass der Aufsatz anstelle des genannten Fensters offen ist und lediglich eine Ablesekante aufweist.

Alle genannten Dokumente des Standes der Technik betreffen Gliedermassstäbe, bei welchen ein Wert am Aufsatz erscheint, der zum vom Gliedermassstab ablesbaren Wert addiert werden muss. Der zu addierende Wert kann dabei eine nicht runde Zahl sein. Der vom Gliedermassstab ablesbare Wert ist sogar üblicherweise ein nicht runder Wert . Das Addieren dieser Werte ist dann einerseits umständlich und andererseits können dabei leicht Fehler vorkommen.

Die Aufgabe der vorliegenden Erfindung ist, die genannten sowie noch weitere Nachteile des Standes der Technik zu beseitigen.

Diese Aufgabe wird beim Gliedermassstab der eingangs genannten Gattung erfindungsgemäss so gelöst, wie dies im kennzeichnenden Teil des Patentanspruchs 1 definiert ist.

Nachstehend werden Ausführungsformen.der vorliegenden Erfindung anhand der beiliegenden Zeichnungen näher erläutert. Es zeigt:
Fig. 1 in einer Seitenansicht den vorliegenden Gliedermassstab bei einer ersten Anwendungsmöglichkeit desselben, wobei der Gliedermassstab mit einer zusätzlichen Messeinrichtung versehen ist,
Fig. 2 in einer Draufsicht den Gliedermassstab aus Fig. 1,
Fig. 3 perspektivisch die Messeinrichtung aus Fig. 1, welche unter anderem auch einen streifenförmigen Schieber aufweist,
Fig. 4 perspektivisch den Schieber aus Fig. 3,
Fig. 5 vergrössert und in einem vertikalen Schnitt die zusätzliche Messeinrichtung aus Fig. 1,
Fig. 6 in einer Draufsicht die Einrichtung aus Fig. 5,
Fig. 7 einen vertikalen Schnitt A-A durch eine erste Ausführungsmöglichkeit des Gliedermassstabes aus Fig. 1,
Fig. 8 einen vertikalen Schnitt A-A durch eine zweite Ausführungsmöglichkeit des Gliedermassstabes aus Fig. 1,
Fig. 9 in einer Draufsicht eine weitere Ausführung der Messeinrichtung,
Fig. 10 in einer Draufsicht eine weitere Anwendungsmöglichkeit der vorliegenden Messeinrichtung,
Fig. 11 in einer Seitenansicht die Anordnung gemäss Fig. 10 und
Fig. 12 einen vertikalen Schnitt B-B durch die erste Ausführungsmöglichkeit des Gliedermassstabes aus Fig. 1.

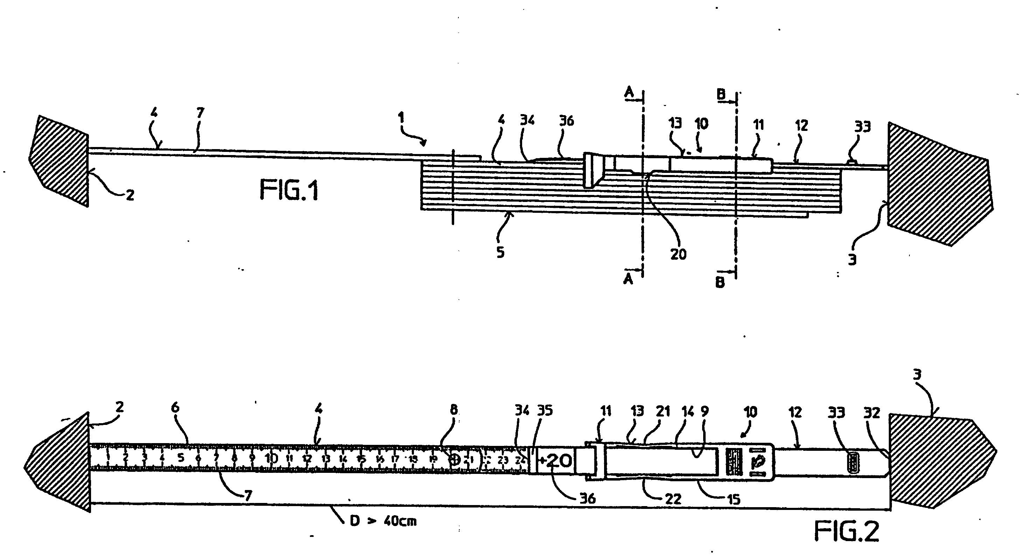

Fig. 1 und 2 zeigen den vorliegenden Gliedermassstab 1 bei einer ersten Art der Anwendung desselben, nämlich bei einer Innenmass-Messung. Das Innenmass wird zwischen zwei Anschlägen bzw. Wänden 2 und 3 gemessen.

Der Gliedermassstab 1 ist einer an sich bekannten Art und er weist streifenförmige Gliedstäbe 4 auf, welche übereinander flach liegen, wenn der Gliedermassstab 1 zu einem Paket 5 zusammengefaltet ist. Der streifenförmige Gliedstab 4 weist schmale Seitenflächen 6 und 7 auf, welche die Breite desselben bestimmen. Zwei sich benachbarte Gliedstäbe 4 sind in einer ebenfalls bekannten Weise mit Hilfe von Gelenkbolzen 8 miteinander gelenkig verbunden. Die Gliedstäbe 4 können aus Kunststoff, aus Holz oder dgl. sein.

Der Gliedermassstab 1 ist mit einer zusätzlichen Messeinrichtung 10 versehen. Diese zusätzliche Messeinrichtung 10 ist auf zumindest einem der Glieder 4 des Gliedermassstabes 1 aufsetzbar. Im Anwendungsfall gemäss Fig. 1 und 2 ist die Messeinrichtung 10 auf dem zweiten bzw. vorletzten Gliedstab 4 des Paketes 5 aufgesetzt. Diese Anordnung wird dann verwendet, wenn der Abstand D (Fig. 2) zwischen den Anschlägen 2 und 3 grösser ist als die Summe aus zwei Längen der Gliedstäbe 4.

Der Abstand zwischen den Achsen der Gelenkbolzen 8 in den Endbereichen des jeweiligen Gliedstabes 4 beträgt bei einem Doppelmeter 20cm. Der jeweilige Gliedstab 4 ist bei einem Doppelmeter somit etwas länger als 20cm. Wenn der Abstand zwischen den Anschlägen 2 und 3 grösser als etwa 40cm ist, dann können sogar mehrere Gliedstäbe 4 aus dem Paket 5 des Gliedermassstabes 1 ausgeklappt und miteinander ausgerichtet werden. Die Messeinrichtung 10 ist in diesem Fall auf dem im Paket 5 des Gliedermassstabes 1 zu oberst bzw. zu den ausgeklappten Gliedstäben 4 am nächsten liegenden Gliedstab 4 im Paket 5 aufgesetzt.

Die Messeinrichtung 10 umfasst ein Gehäuse 11 sowie einen in diesem Gehäuse 11 verschiebbar gelagerten Schieber 12. Das Gehäuse 11 ist auf zumindest einem der Glieder 4 bzw. auf dem Paket 5 des Gliedermassstabes 1 aufsetzbar. Der Grundkörper 13 des Gehäuses 11 hat im Prinzip die Form eines im dargestellten Fall rechteckförmigen Rahmens, welcher ein Fenster 9 begrenzt (Fig. 6). Dieses Fenster 9 befindet sich im oberen Bereich des Gehäuses 11, d.h. oberhalb des Schiebers 12.

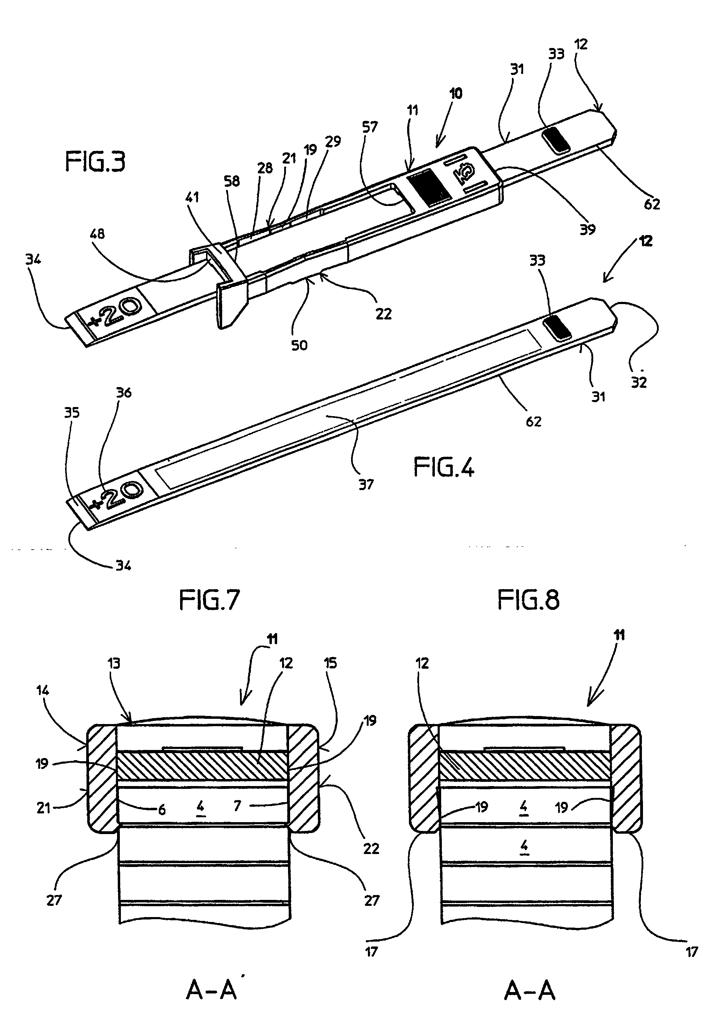

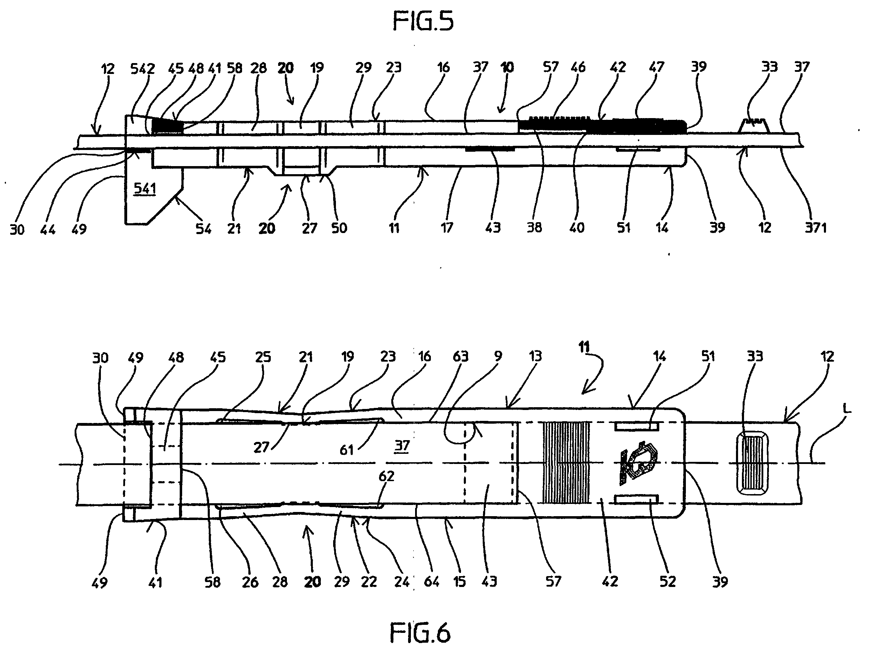

Der Schieber 12 (Fig. 3 bis 6) hat einen Grundkörper 31 , welcher die Form eines flachen und steifen Streifens hat. Dieser Streifen 31 hat eine obere Grossfläche 37 und eine untere Grossfläche 371 (Fig. 5) sowie schmale Seitenflächen 61 und 62. Der Abstand zwischen diesen Seitenflächen 61 und 62 entspricht dem Abstand zwischen den schmalen Seitenflächen 6 und 7 eines der Gliedstäbe 4. Dies bedeutet, dass der Abstand zwischen den Schmalseiten 61 und 62 des Schiebers 12 dem Abstand zwischen den Schmalflächen 6 und 7 des Gliedstabes 4 gleicht oder etwas kleiner ist als die Breite des Gliedstabes 4.

Zwei der Wände 14 und 15 des rechteckförmigen Grundkörpers 13 des Gehäuses 11, im dargestellten Fall sind dies die längeren Wände des Grundkörpers 13, verlaufen parallel zur Längsachse L (Fig. 6) der Messeinrichtung 10. Der Querschnitt dieser Längswände 14 und 15 ist im dargestellten Fall im wesentlichen rechteckförmig (Fig. 12). Die jeweilige Längswand 14 bzw. 15 des Gehäuses 11 weist eine obere, horizontale Längsfläche bzw. -kante 16 und eine untere horizontale Längsfläche bzw. -kante 17 auf. Der Abstand zwischen diesen horizontalen Längsflächen 16 und 17, d.h. die Höhe der Längswände 14 und 15, ist so gross, dass sie unter anderem auch die Dicke eines der Gliedstäbe 4 und des Schiebers 12 überbrückt.

Die jeweilige Längswand 14 bzw. 15 weist eine Innenfläche 63 bzw. 64 auf, wobei diese Innenflächen 63 und 64 zur Führung des Schiebers 12 bestimmt ist. Diese Innenflächen 63 und 64 erstrecken sich über die ganze Höhe der Innenseite der Längswände 14 und 15. Der Abstand zwischen den sich einander zugewandten vertikalen Innenflächen 63 und 64 der Längswände 14 und 15 entspricht dem Abstand zwischen den Seitenflächen 61 und 62 des Schiebers 12, und zwar so, dass der Schieber 12 zwischen den Innenflächen 63 und 64 in einer horizontalen Richtung spielfrei geführt werden kann.

Zwischen den Seitenflächen 61 und 62 am Schieber 12 und den Innenflächen 63 und 64 am Rahmen 13 ist ein bestimmter Reibungswiderstand vorhanden, dessen Grösse verhindert, dass der Schieber 12 sich im Gehäuse 11 frei bewegen kann. Andererseits erlaubt die genannte Grösse des Reibungswiderstandes, dass der Schieber 12 im Gehäuse 11 zu Messzwecken bewegt werden kann. Die Grösse des Reibungswiderstandes lässt sich durch konstruktive Massnahmen in diesem oberen Bereich des Gehäuses 11 einstellen, und zwar unabhängig von jenem Bereich des Gehäuses 11, welcher für die Halterung der Messeinrichtung 10 auf dem Massstabpaket 5 zuständig ist.

Der Grundkörper 13 umfasst ferner Querwände. Diese weisen äussere Quer- bzw. Stirnkanten 39, 48 und 49 sowie Innenkanten 57 und 58 auf (Fig. 3, 5 und 6). Der Abstand zwischen den Innenflächen 63 und 64 der Längswände 14 und 15 des Gehäuses 11 und somit auch die Länge der Innenkanten 57 und 58 der Rahmen-Querwände entspricht der Breite des Schiebers 12.

Das Gehäuse 11 ist mit einer Klemmvorrichtung 20 versehen, welche dazu bestimmt und ausgebildet ist, dass die Messeinrichtung 10 auf dem Gliedermassstab 1 aufgesetzt und auf diesem mit einer beträchtlichen Kraft an Ort und Stelle gehalten werden kann. Diese Klemmvorrichtung 20 befindet sich im unteren Bereich des Gehäuses 11. Ausserdem befindet sich die Klemmvorrichtung 20 in einem ersten Bereich der Länge der Rahmenseitenwände 14 und 15, z.B. in einer ersten Hälfte der genannten Länge. Die Mittel zur Führung des Schiebers 12 befinden sich dagegen in einem anderen Bereich der Länge der Rahmenseitenwände 14 und 15, z.B. in der zweiten Hälfte der Rahmenlänge. Die Kraft, welche den vorstehend genannten Reibungswiderstand verursacht, ist bloss ein Bruchstück von jener Kraft, mit welcher die Klemmvorrichtung 20 die Messeinrichtung 10 auf dem Gliedermassstab 1 hält.

Die Klemmvorrichtung 20 umfasst einander gegenüberliegende Klemmorgane 21 und 22, zwischen welchen zumindest eines der Glieder 4 des Gliedermassstabes 1 liegen bzw. geklemmt sein kann. Je eines der Klemmorgane 21 bzw. 22 ist im Bereich der Innenseite einer der längeren Seitenwände 14 bzw. 15 des Gehäuses 11 angeordnet. Das jeweilige Klemmorgan 21 bzw. 22 (Fig. 3, 5 und 6) umfasst einen Abschnitt 23 bzw. 24 der Längswand 14 bzw. 15-und dieser Wandabschnitt 23 bzw. 24 ist federnd ausgebildet. Der jeweilige federnde Wandabschnitt 23 bzw. 24 ist dadurch bedingt, dass eine Ausnehmung 25 bzw. 26 in der Innenseite der Längswand 14 bzw. 15 ausgeführt ist. Diese Ausnehmung 25 bzw. 26 erstreckt sich zwischen der oberen Horizontalfläche 16 und der unteren Horizontalfläche 17 der betreffenden Längswand 14 bzw. 15 und sie hat die Form einer breiten und flachen Rinne.

Der federnde Wandabschnitt 23 bzw. 24 ist so verformt, dass er die Form eines offenen Buchstabens V mit den Schenkeln 28 und 29 hat. Die einander zugewandten Endpartien der V-Schenkel 28 und 29 befinden sich in einem Abstand voneinander. Die V-förmigen Wandabschnitte 23 und 24 sind so orientiert, dass die einander zugewandten Enden der V-Schenkel 28 und 29 vom übrigen Teil der betreffenden Seitenwand 14 bzw. 15 des Gehäuses 11 entfernt, d.h. zur Mitte des Hohlraumes im Gehäuse 11 hin versetzt angeordnet sind. Zwischen den Enden der V-Schenkel 28 und 29 ist eine Platte 19 angeordnet, welche praktisch parallel zu den Längswänden 14 und 15 verläuft. Die Dicke dieser Platte 19 ist etwas grösser als die Dicke der geschwächten Wandäbschnitte 23 und 24. Die Platte 19 ist gegenüber den einander zugekehrten Enden der V-Schenkel 28 und 29 so angeordnet, dass sie von diesen Schenkelenden gegen die Mitte des Hohlraumes im Gehäuse 11 hervortritt.

Die Höhe der Platte 19 ist grösser als der Abstand zwischen den Horizontalflächen 16 und 17 der Seitenwände 14 und 15, wobei die Platte 19 zumindest bis in den Bereich der Seitenwände 6 und 7 jenes Gliedstabes 4 reicht, auf dem die Messeinrichtung 10 aufgesteckt ist (Fig. 5, 7 und 8). Die Oberkante der Platte 19 ist mit der oberen Horizontalfläche 16 der Seitenwand 14 bzw. 15 bündig. Weil die Höhe der Platte 19 grösser ist als die Höhe der Längswände 14 und 15 (Fig. 14), steht der untere Rand der Platte 19 von der unteren Horizontalfläche 17 der Längswand 14 bzw. 15 unten ab, sodass eine Ausbuchtung 50 von der Unterkante 17 der Längswand 14 bzw. 15 absteht.

Vom unteren Rand der dem Inneren des Gehäuses 11 zugewandten Grossfläche der Platte 19 steht ein gegen das Innere des Gehäuses 11 hin gerichteter Vorsprung 27 ab. Dieser Vorsprung 27 an den Klemmorganen 21 und 22 ist zum Anliegen an einer der Seitenflächen bzw. -kanten 6 und 7 der Gliedstäbe 4 bestimmt und ausgeführt. Deswegen wird dieser Vorsprung 27 auch als Andrückteil bezeichnet und dieser Andrückteil 27 ist vom betreffenden federnden Wandabschnitt 23 bzw. 24 getragen. Der Vorsprung 27 ist im wesentlichen quaderförmig und seine Längsrichtung stimmt mit der Längsrichtung des Gehäuses 11 überein. Der Abstand zwischen den Vorsprüngen 27 der einander gegenüberliegenden Klemmorgane 21 und 22 ist kleiner als die Breite eines der Glieder 4 des Gliedermassstabes 1.

Wegen der V-Form der geschwächten Wandabschnitte 23 und 24 tritt der Vorsprung 27 aus der betreffenden flachen Rinne 25 bzw. 26 in das Innere des Gehäuses 11 hervor, sodass der Vorsprung 27 an einer der Seitenflächen 6 bzw. 7 des Gliedstabes 4 aufliegen (Fig. 8) oder diesen sogar hintergreifen kann (Fig. 7). Die Platte 19 des Wandabschnittes 23 bzw. 24 sowie der Vorsprung 27 liegen somit zur Längsachse L der zusätzlichen Messeinrichtung 10 näher als die voneinander entfernt liegenden Endpartien der V-Schenkel 28 und 29 bzw. die vertikalen Seitenflächen 63 und 64 der Längswände 14 und 15 am Gehäuse 11.

Bei der Messeinrichtung 10 gemäss Fig. 7 verlaufen die einander zugewandten, d.h. inneren Grossflächen der Platten 19 der Klemmorgane 21 und 22 parallel zueinander sowie parallel zu den Seitenkanten 6 und 7 der Gliedstäbe 4. Der Vorsprung 27 greift im dargestellten Fall in einen Spalt zwischen zwei im Paket 5 übereinander liegenden Gliedstäben 4. Dabei hintergreift der Vorsprung 27 die Seiten 6 und 7 des zuoberst liegenden Gliedstabes 4.

Bei der Messeinrichtung 10 gemäss Fig. 8 verläuft die dem gegenüberliegenden Klemmorgan 21 bzw. 22 zugewandte Grossfläche der Stirnplatte 19 schräg, und zwar so, dass der Abstand zwischen den Grossflächen mit dem zunehmenden Abstand von den Oberkanten 16 an den Längswänden 14 und 15 abnimmt. Der Abstand zwischen jenen Endabschnitten der Stirnplatten 19, welche von den Oberkanten 16 entfernt liegen, ist etwas kleiner als die Breite des Gliedstabes 4. Folglich liegen die Stirnplatten 19 an den Seitenkanten 6 und 7 des Gliederstabes 4 mit einem bestimmten Druck bzw. mit einer bestimmten Vorspannung auf, welche zu einer sicheren Halterung der Messeinrichtung 10 auf dem Gliedstab 4 ausreicht.

Eine der Endflächen 32 (Fig. 2 und 4) des Schiebers 12 ist als eine Stirnfläche ausgebildet, welche zur Längsachse des Schiebers 12 und somit auch zur Längsachse L des Gliedermassstabes 1 rechtwinklig steht. Diese Stirnfläche 32 dient zur Auflage an einer der Innenflächen 3, zwischen welchen eine Innenmessung an einem Objekten erfolgen soll. Während einer Messung befindet sich diese Stirnfläche 32 ausserhalb des Gliedermassstabes 1, und zwar in der Verlängerung der Längsachse L des Gliedermasstabes 1. Die Stirnfläche 32 liegt zum 0-Strich des ersten Gliedstabes 4 im Paket 5 eines Gliedermassstabes 1 entgegengesetzt. Der 0-Strich des ersten Gliederstabes 4 liegt während der Messung an der gegenüberliegenden Innenfläche 2 des Messobjektes (Fig. 2).

Im Bereich des die erste Stirn- bzw. Endfläche 32 aufweisenden Endes des Schiebers 12 ist ein erster Anschlag 33 ausgeführt, welcher sich in einem Abstand von der Stirnfläche 32 befindet und welcher im dargestellten Fall als ein sich vom Grundkörper 31 des Schiebers 12 aufwärts erhebender Vorsprung ausgeführt ist. Dieser Vorsprung 33 ist im dargestellten Fall im wesentlichen quaderförmig.

An die gegenüberliegende bzw. zweite Stirn- bzw. Endfläche 34 des Schiebergrundkörpers 31 (Fig. 2 bis 4), welche ebenfalls rechtwinklig zur Längsachse L des Schiebers 12 steht, schliesst sich im Bereich der Oberseite des Schiebergrundkörpers 31 eine flach verlaufende Phase 35 (Fig. 4) einerseits an, welche sich andererseits gegen das erst genannte Ende 32 des Schiebers 12 hin erstreckt. Die Phase 35 soll die Genauigkeit der Ablesung des gemessenen Wertes an der zweiten Endfläche 34 des Schiebers 12 erhöhen.

In einem Abstand von der Phase 35 befindet sich ein zweiter Anschlag 36 auf der Oberseite des Schiebergrundkörpers 31. Im dargestellten Fall ist dieser Anschlag 36 durch Ziffern gebildet, welche aus der Oberseite des Schiebergrundkörpers 12 hervortreten. Diese Ziffern bilden die Zahl "20". Zwischen den Anschlägen 33 und 36 erstreckt sich die obere Grossfläche 37 des Schiebers 12. Diese Freifläche 37 kann gemäss dem hier gezeigten Beispiel als Werbefläche ausgenützt werden.

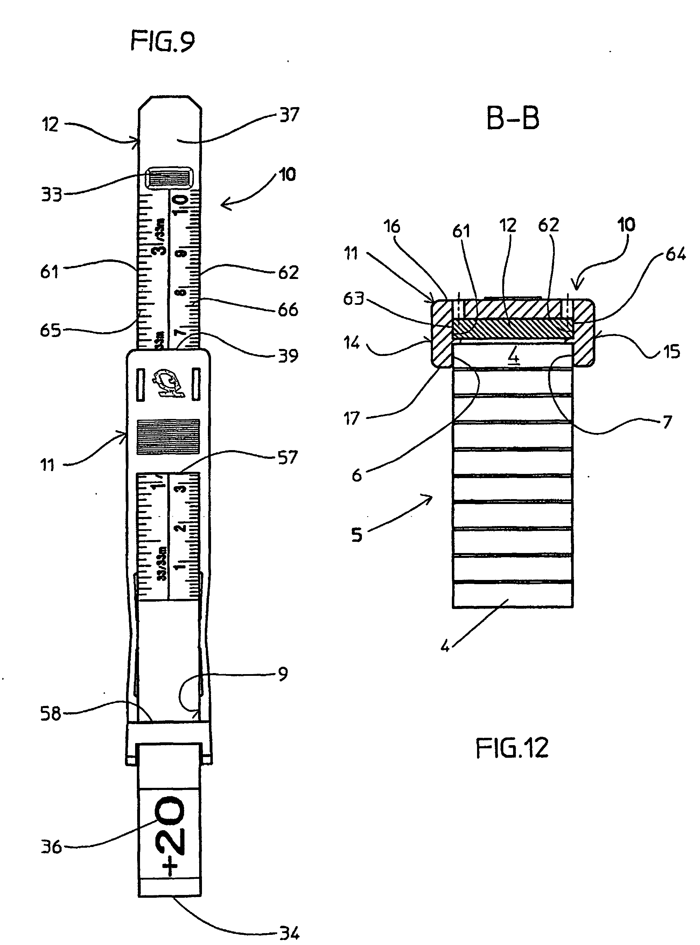

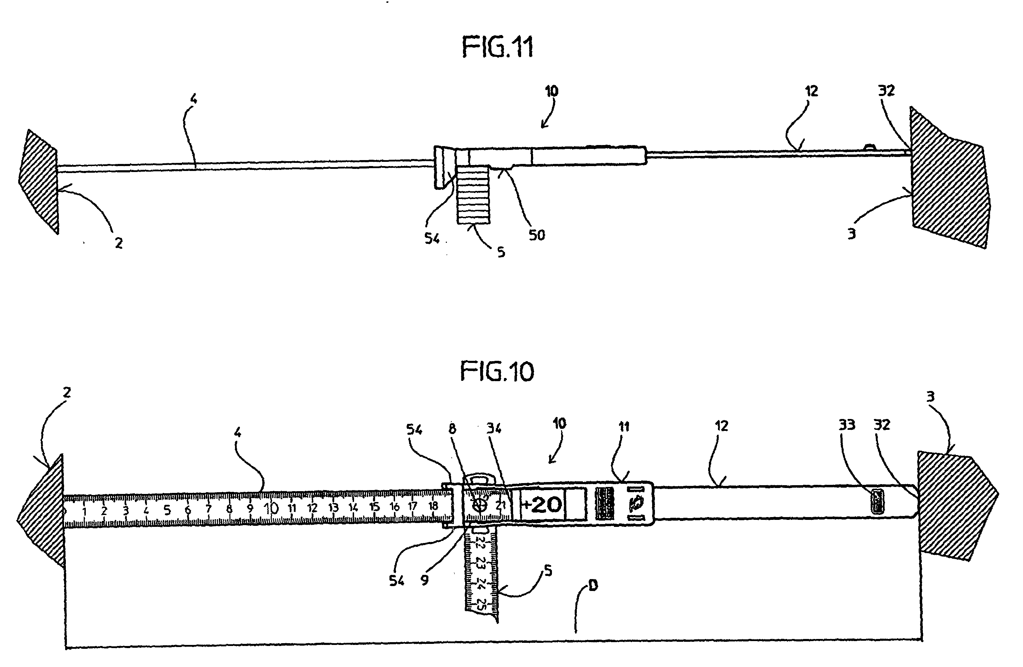

Jene Endpartien der Längswände 14 und 15, welche dem abgefasten Ende 34 des Schiebers 12 zugewandt sind, weisen je eine vertikal verlaufende Erweiterung 54 auf. Diese Erweiterung 54 ist asymmetrisch, wobei der grössere Erweiterungsabschnitt 541 sich von der unteren Horizontalkante 17 der Längswand 14 bzw. 15 abwärts erstreckt. Der kleinere Erweiterungsabschnitt 542 erhebt sich aus der oberen Horizontalkante 16 der Längswand 14 bzw. 15 empor. Stirnseitig, d.h. zugewandt zum abgefasten Ende des Schiebers 12, weist die Erweiterung 54 eine Anschlagkante 49, welche senkrecht zur Längsachse L verläuft. Dieser Anschlag 54 wird bei jener Art der Messung verwendet, welche in Fig. 9 und 10 abgebildet ist.

Der Rahmen 13 des Gehäuses 11 weist auch steife Stege 41, 42, 43 und 44 auf, welche sich zwischen den Längswänden 14 und 15 des Rahmens 13 erstrecken. Folglich verlaufen die Stege 41 bis 44 praktisch rechtwinklig zur Längsachse L der Messeinrichtung 10. In diesem Sinne stellen die Stege 41 bis 44 die kürzeren Wände des rechteckförmigen Rahmens 13 dar, welche die Längswände 14 und 15 des Rahmens 13 in einem vorgegebenen Abstand voneinander halten. Die Grossflächen der streifenförmigen Stege 41 bis 44 verlaufen praktisch parallel zur Hauptebene des Rahmens 13.

Die Stege 41 bis 44 bilden zwei Gruppen, zwischen welchen der Schieber 12 angeordnet ist und zwischen welchen der Schieber 12 in einer Vertikalrichtung praktisch spielfrei geführt wird. Die erste Gruppe der Stege 41 und 42 befindet sich oberhalb und die zweite Gruppe der Stege 43 und 44 befindet sich unterhalb des Schiebers 12. Die bereits beschriebenen Anschläge 33 und 36 auf dem Schieber 12 können an einem der oberen Stegen 42 anschlagen, um zu verhindern, dass der Schieber 12 das Gehäuse 11 unkontrolliert verlässt.

Der erste obere Steg 41 befindet sich in jenem Endbereich des Gehäuses 11, welcher die Anschläge 54 aufweist. Dieser Endbereich bildet einen der Bestandteile jener Hälfte des Gehäuses 11, in welcher sich auch die Klemmvorrichtung 20 befindet. Dieser Steg 41 erstreckt sich zwischen den Anschlägen 54 an den Längswänden 14 und 15, und zwar zwischen den oberen Abschnitten 542 der Anschläge 54. Dieser Steg 41 ist verhältnismässig schmal und seine Vorderkante 48 befindet sich in einem Abstand von der Anschlagkante 49. Die vordere, d.h. die dem abgefasten Ende 34 des Schiebers 12 zugewandte Kante 48 des ersten oberen Steges 41 befindet sich hinsichtlich der genannten Stirnkanten 49 in das Innere des Gehäuses 11 zurückversetzt.

Im mittleren Bereich der Unterseite dieses Steges 41 ist eine quer zur Länge dieses Steges 41 verlaufende Ausnehmung 45 mit einem etwa rechteckförmigen Querschnitt ausgeführt. Die Breite und die Tiefe dieser Ausnehmung 45 sind etwas grösser als die Breite und die Höhe des zweiten Anschlages 36 auf dem Schieber 12, sodass dieser Anschlag 36 durch die Ausnehmung 45 im ersten Steg 41 ungehindert hindurchfahren kann.

Der zweite obere Steg 42 befindet sich im entgegengesetzten Endbereiche des Gehäuses 11, d.h. in der anderen Hälfte des Gehäuses 11, welche der ersten Stirnfläche 32 des Schiebers 12 zugewandt liegt. Die dieser Stirnfläche 32 zugewandte Kante 39 dieses Steges 42 ist mit den Endflächen der Längswände 14 und 15 bündig. Dieser Steg 42 hat eine beträchtliche Abmessung in Richtung der Längsachse L, sodass dieser Steg 42 sich beispielsweise über ein Viertel der Länge des Gehäuses 11 erstrecken kann. Die oberen Grossflächen der oberen Stege 41 und 42 können mit der Oberkante 16 der Längswände 14 und 15 des Gehäuses 11 praktisch bündig sein.

Die Unterseite des zweiten oberen Steges 42 hat zwei Abschnitte 46 und 47. Die Grundfläche des ersten Unterseite-Abschnittes 46, welcher zum abgefasten Ende 34 des Schiebers 12 näher liegt als der zweiten Unterseite-Abschnitt 47, befindet sich in einem Abstand von der Oberfläche des Schiebers 12. Zwischen diesen Flächen ist somit ein Hohlraum 38 vorhanden. Die Abmessungen dieses Hohlraumes 38 sind etwas grösser als die Abmessungen des zweiten Anschlages 36 auf dem Schieber 12.

Wenn der dargestellte Schieber 12 im Gehäuse 11 nach rechts bewegt wird, dann fährt der zweite Anschlag 36 zunächst durch die Ausnehmung 45 in der Unterseite des ersten oberen Steges 41 und er fährt dann weiter nach rechts, bis er in den genannte Hohlraum 38 im zweiten oberen Steg 42 gelangt. Hier schlägt dieser Anschlag 36 an der inneren Seitenkante 40 des zweiten Unterseite-Abschnittes 47 an, sodass man den Schieber 12 nicht mehr weiter nach rechts bewegen kann. Da die innere Seitenkante 40 dieses zweiten Steges 42 sich nahe an der äusseren Stirnfläche 39 des Gehäuses 11 befindet, kann die vorgegebene Länge des Schiebers 12 zur Durchführung von Messungen gemäss Fig. 1 und 2 optimal bzw. maximal ausgenützt werden.

Die unteren Stege 43 und 44 des Gehäuses 11 dienen unter anderem als Auflagen für die glatte Unterseite des Schiebers 12 und sie sind verhältnismässig dünn. Der erste untere Steg 43 befindet sich im mittleren Bereich des Gehäuses 11. Der zweite untere Steg 44 erstreckt sich zwischen den Erweiterungen 54 der Längswände 14 und 15. Im Bereich der gegenüberliegenden Endpartie des Gehäuses 11 befinden sich Führungsvorsprünge 51 und 52 (Fig. 6), welche welche von den Innenflächen 63 und 64 der Längswände 14 und 15 abstehen und welche ebenfalls dünn ausgeführt sind. Diese Vorsprünge 51 und 52 unterstützen den Schieber 12 in diesem Endbereich des Gehäuses 11, ähnlich wie die unteren Stege 43 und 44.

Wenn die zusätzliche Messeinrichtung 10 auf dem Paket 5 eines Gliedermassstabes 1 aufgesetzt ist, dann liegt die Unterseite der unteren Stege 43 und 44 sowie die Unterseite der Unterstützungsvorsprünge 51 und 52 auf der Oberseite des darunter liegenden Gliedes 4 des Gliedermassstabes 1 auf. Der Abstand zwischen der Unterseite der unteren Stege 43, 44 sowie der Unterstützungsvorsprünge 51 und 52 und dem Vorsprung 27 an der Stirnplatte 19 der Klemmorgane 21 und 22 muss zumindest so gross sein wie die Höhe eines der Gliedstäbe 4, damit der im Paket 5 zuoberst liegende Gliederstab 4 durch die Klemmvorrichtung 20 ergriffen werden kann.

Fig. 1 und 2 zeigen eine Anordnung, welche zur Messung von Abständen D dient, die grösser als etwa 40cm sind. Während eines solchen Messvorganges ist die Messeinrichtung 10 auf dem Paket 5 aufgesetzt, und zwar so, dass der Schieber 12 über jenem Gliedstab 4 liegt, welcher sich im Paket 5 während dieser Messung zuoberst befindet. Die vorstehend beschriebene erste Endpartie 32 des Schiebers 12 befindet sich, wie dargelegt, ausserhalb des Paketes 5 und sie liegt am Anschlag 3 an. Der Schieber 12 verdeckt dabei jenen Abschnitt der Oberseite des zuoberst liegenden Gliedstabes 4, welcher sich von der unter dem Schieber 12 liegenden Endpartie des Paketes 5 bis zu dieser zweiten Endfläche 34 des Schiebers 12 erstreckt. Folglich sind die sich in diesem Bereich des in Paket 5 zuoberst liegenden Gliedstabes 4 nicht sichtbar. Sichtbar sind erst jene Zahlen auf der Oberseite des Gliedstabes 4, welche sich von der Stirnkante 34 des Schiebers 12 links befinden.

Der Abstand zwischen den Endflächen 32 und 34 des Schiebers 12 gleicht dem Abstand zwischen den Achsen der Gelenke 8, mit deren Hilfe die einzelnen Gliedstäbe 4 miteinander gelenkig verbunden sind. Bei einem Doppelmeter beträgt dieser Abstand 20cm. Die Ablesung des Messwertes bei der Messung gemäss Fig. 1 und 2 erfolgt in der Weise, dass man zu jener Zahl 20cm addiert, welche an der zweiten Endfläche 34 des Schiebers 12 auf der Oberseite des im Paket 5 zuoberst liegenden Gliedstabes 4 ersichtlich ist.

Fig. 9 zeigt eine weitere Ausführungsmöglichkeit der Messeinrichtung 10. Bei dieser Messeinrichtung 10 ist die Fläche 37 auf der Oberseite des Schiebers 12 mit Skalen 65 und 66 versehen, welche bei der Durchführung von Messungen ebenfalls ausgenützt werden können. Die jeweilige Skala 65 bzw. 66 schliesst sich an einen der seitlichen Längsränder 61 bzw. 62 des Schiebers 12 an. Im dargestellten Fall ist die links dargestellte Skala 65 eine Spezial-Skala und die rechte Skala 66 ist eine Zentimeter-Skala. Eine so ausgeführte Messeinrichtung 10 kann an Gliedermasstäben 1 angewandt werden, welche eine Spezial-Skala oder eine Zentimeter-Skala oder sowohl eine Spezial- als auch Zentimeter-Skala aufweisen. Die Ablesung der Messwerte kann entweder an der vorstehend genannten innenliegenden Stirnfläche 34 des Schiebers 12 (Fig. 1 und 2) oder an einer der Querkanten 39, 57 bzw. 58 des Gehäuses 11 der Messeinrichtung 10 erfolgen.

Fig. 10 und 11 zeigen eine Anordnung zur Messung von Distanzen zwischen den Anschlägen 2 und 3, deren Grösse zwischen etwa 20cm und 40cm liegt. Im dargestellten Fall beträgt der Abstand D 41,5cm. Bei solchen Messungen ist die Messeinrichtung 10 auf dem ersten bzw. letzten Gliedstab 4 eines faltbaren Doppelmeters aufgesteckt, und sie ist so orientiert, dass die die Anschläge 54 aufweisende Endpartie des Gehäuses 11 jener Endpartie des ersten Gliedstabes 4 zugewandt liegt, welche die 0-Marke der Skala auf dem ersten Gliedstab 4 aufweist. Das Paket 5 mit den übrigen Gliedstäben 4 des Gliedermassstabes 1 steht senkrecht zum ersten Gliedstab 4. Das Paket 5 liegt zwischen den Erweiterungen 54 und der Ausbuchtung 50 am Gehäuse 11.

Beim genannten Abstand von 41,5cm befindet sich das Gehäuse 11 der Messeinrichtung 10 im Bereich der innenliegenden Endpartie des ersten Gliedstabes 4, über welche dieser mit dem folgenden, d.h. mit dem zweiten und darunter liegenden Gliedstab 4 des Gliedermassstabes 1 über den Bolzen 8 gelenkig verbunden ist. Dieser Bolzen 8 ist im Fenster 9 ersichtlich.

Die Klemmvorrichtung 20 erfasst die innenliegende Endpartie des ersten Gliedstabes 4. Der Schieber 12 ist so weit nach rechts ausgefahren, dass seine die zweite Stirnkante 34 aufweisende Endpartie die darunter liegende innere Endpartie des ersten Gliedstabes 4 nur ganz wenig, beispielsweise nur über 1mm, oder sogar gar nicht überlappt. In solchen Fällen erfolgt die Ablesung des Messwertes an der zweiten Stirnfläche 34 des Schiebers 12, welche sich im Inneren des Fensters 8 im Gehäuse 11 befindet.

Weil die eine Hälfte des Gehäuses 11 wegen der hier vorhandenen Klemmvorrichtung 20 auf dem Gliedstab 4 sicher haftet und weil die andere und sich ausserhalb des Gliedstabes 4 bereits befindliche Hälfte des Gehäuses 11 den Schieber 12 sicher führt, bleibt die Lage des Schiebers 12 auch in solchen extremen Stellungen des Schiebers 12 gegenüber dem ersten Gliedstab 4 stabil. Zudem bleiben alle Funktionen der Messvorrichtung 10 auch in solchen extremen Lagen des Schiebers 12 erhalten. Hieraus dürfte deutlich ersichtlich sein, dass die Messeinrichtung 10 in der Tat eine teleskopische Anordnung ist.

Einer der wesentlichen Vorteile des vorliegenden Gliedermasstabes besteht darin, dass die gemessenen Werte sehr einfach abgelesen werden können. Bei der Messart gemäss Fig. 1 und 2 liest man bei einer Messung jenen Wert von der Skala auf dem unter der zusätzlichen Messvorrichtung 10 liegenden Gliederstab 4 ab, welcher unterhalb der Ablesekante 34 des Schiebers 12 liegt. Dazu addiert man 200mm und der gemessene Wert liegt vor. Die zusätzliche Messvorrichtung 10 kann an einem Gliedermassstab schnell und einfach angebracht und von diesem ebenfalls schnell und einfach entfernt werden. Die Messvorrichtung 10 kann praktisch an jedem Gliedermassstab angebracht werden, weil die Klemmorgane 21 und 22 am Gehäuse 11 der Messvorrichtung 1 in weiten Grenzen federnd sind.

Durch die Trennung der Führungsmittel für den Schieber 12 von den Mitteln zur Erfassung des Massstabpaketes 5 ist sichergestellt, dass die Grösse des auf den Schieber 12 einwirkenden Reibungswiderstandes von der Grösse der Haltekraft unabhängig ist, mit der die Messeinrichtung 10 auf dem Paket 5 gehalten ist. Folglich kann man Messungen bei einem geringen Reibungswiderstand zwischen dem Gehäuse 11 und dem Schieber 12 durchführen, während die Messeinrichtung 10 mit einer ganz beträchtlichen Kraft auf dem Gliedermassstab 1 gehalten ist.

Die Messeinrichtung 10 erlaubt Messungen der in Fig. 1 und 2 abgebildeten Art über die ganze Länge des Gliedermassstabes. Die vorbekannte Messeinrichtung erlaubt dagegen nur Messungen, deren maximale Grösse kleiner ist als die Summe aus der Länge des Schiebers und aus der Länge eines der Gliedstäbe.

## Patentansprüche

1. Gliedermassstab mit einer zusätzlichen Messeinrichtung, welche auf zumindest einem der ein Paket (5) bildenden Gliedstäbe (4) des Gliedermassstabes aufgesetzt ist, wobei die Messeinrichtung (10) einen Schieber (12) umfasst, welcher sich oberhalb des zumindest eines Gliederstabes (4) befindet und welcher zwei Endflächen (32,34) aufweist, **dadurch gekennzeichnet, dass** der Schieber (12) einen Grundkörper (31) aufweist, welcher jenen Abschnitt der Oberseite des Gliedstabes (4) verdeckt, der sich von der unter dem Schieber (12) liegenden Endpartie dieses Gliedstabes (4) bis zur zweiten und als Ablesekante dienenden Endfläche (34) des Schiebers (12) erstreckt, und dass der Abstand zwischen den Endflächen (32,34) des Schiebers (12) dem Abstand zwischen den Achsen der Gelenke (8) gleicht, mit deren Hilfe die einzelnen Gliedstäbe (4) im Paket (5) miteinander gelenkig verbunden sind.

2. Gliedermassstab nach Patentanspruch 1, **dadurch gekennzeichnet, dass** die erste Endfläche (32) des Schiebers (12) als eine Stimfläche ausgebildet ist, welche zur Längsachse des Schiebers (12) senkrecht steht und zur Auflage an einer der Innenflächen (3) bestimmt ist, zwischen welchen eine Innenmessung erfolgen soll, dass sich diese erste Stirnfläche (32) während einer Messung ausserhalb des Gliedermasstabes (1) befindet, und dass die zweite Stirn- bzw. Endfläche (34) des Schiebers (12), welche als Ablesekante dient, ebenfalls rechtwinklig zur Längsachse L des Schiebers (12) steht und sich oberhalb des Gliedstabes (4) befindet.

3. Gliedermassstab nach Patentanspruch 1, **dadurch gekennzeichnet, dass** die Messeinrichtung ferner ein längliches Gehäuse (11) umfasst, dass dieses Gehäuse (11) einen ersten Bereich aufweist, welcher eine Vorrichtung (20) zur wegnehmbaren Klemmung zumindest eines der Gliedstäbe (4) des Massstabes (1) umfasst, und dass das Gehäuse (11) femer einen zweiten Bereich aufweist, welcher zur Führung des verschiebbaren Schiebers (12) ausgebildet ist.

4. Gliedermassstab nach Patentanspruch 3, **dadurch gekennzeichnet, dass** der Querschnitt des Grundkörpers (13) des Gehäuses (11) im wesentlichen U-förmig ist, dass die Schenkel dieser U-Form Seitenwände (14,15) des Gehäuses (11) darstellen, dass Stege (41,42,43,44) eine die Seitenwände (14,15) miteinander verbindende Bodenpartie der U-Form bilden, dass in dieser Bodenpartie ein Fenster (9) vorhanden ist und dass sich dieses Fenster (9) im oberen Bereich des Gehäuses (11), d.h. oberhalb des Schiebers (12) befindet.

5. Gliedermassstab nach Patentanspruch 4, **dadurch gekennzeichnet, dass** sich jener Gehäusebereich, welcher die Klemmvorrichtung (20) umfasst, innerhalb einer ersten Hälfte der Länge des Gehäuses (11) befindet, dass die Klemmvorrichtung (20) Klemmorgane (21,22) umfasst, von welchen je eines einer der Seitenwände (14,15) des Gehäuses (11) zugeordnet ist und dass diese Klemmorgane (21,22) sich in einem derartigen Abstand voneinander befinden, dass zumindest eines der Gliedstäbe (4) des Gliedermassstabes (1) zwischen den Klemmorganen (21,22) wegnehmbar geklemmt sein kann.

6. Gliedermassstab nach Patentanspruch 5, **dadurch gekennzeichnet, dass** das jeweilige Klemmorgan (21;22) einen Abschnitt (23;24) der je einen Seitenwand (14;15) umfasst, dass dieser Wandabschnitt (23;24) federnd ist, dass das Klemmorgan (21;22) femer eine Platte (19) umfasst, welche durch den fedemden Wandabschnitt (23;24) getragen ist, dass diese Platte (19) der Innenseite des Wandabschnittes (23,24) zugeordnet ist, wobei eine der Randpartien dieser Platte (19) sich vom genannten Wandabschnitt (23,24) weg erstreckt, und dass die Platte (19) zur Auflage auf einer der Seitenkanten (6;7) zumindest eines der Gliedstäbe (4) bestimmt ist.

7. Gliedermassstab nach Patentanspruch 6, **dadurch gekennzeichnet, dass** die vom Gehäusegrundkörper (13) entfernt liegende Endpartie der Platte (19) eines der Klemmorgane (21;22) mit einem Vorsprung (27) versehen ist, dass dieser Vorsprung (27) gegen den Vorsprung (27) an der Platte (19) des gegenüberliegenden Klemmorgans (21;22) hin gerichtet ist und dass der Abstand des jeweiligen Vorsprungs (27) vom Grundkörper (13) zumindest so gross ist wie die Dicke eines der Glieder (4) des Massstabes (1).

8. Gliedermassstab nach Patentanspruch 3, **dadurch gekennzeichnet, dass** der zweite Bereich des Gehäuses (11) sich oberhalb des ersten Gehäusebereiches erstreckt, dass sich der Schieber (12) zwischen den Stegen (41,42,43, 44) in seiner Längsrichtung bewegen lässt und dass der Schieber (12) sich oberhalb jenes Gliedstabes (4) befindet, auf welchem die Messeinrichtung (10) aufgesetzt ist.

9. Gliedermassstab nach Patentanspruch 4, **dadurch gekennzeichnet, dass** der Gehäusegrundkörper (13) die Form eines rechteckförmigen Rahmens hat, dass sich der erste Bereich der Messeinrichtung (10), welcher die Klemmorganen (21,22) umfasst, im Bereich der ersten Hälfte des Gehäusegrundkörpers (13) befindet und dass die zweite Hälfte des Gehäusegrundköpers (13) sich von der ersten Hälfte seitlich weg erstreckt, sodass der Schieber (12) seitlich teleskopisch so weit ausgefahren werden kann, dass die als Ablesekante dienende Endfläche (34) im Inneren des Gehäusegrundkörpers (13) liegt.

10. Gliedermassstab nach Patentanspruch 3, **dadurch gekennzeichnet, dass** die freie Eridpartie jenes Bereiches des Gehäuses (11) der Messeinrichtung (1), in welchem sich die Klemmvorrichtung (20) befindet, mit Erweiterungen (54) versehen ist, dass diese Erweiterungen (54) Stirnkanten (49) aufweisen, welche sich an der vom übrigen Teil des Gehäusegrundkörpers (13) abgewandten Seite der Erweiterungen befinden, dass die Stirnkanten (49) senkrecht zur Längsrichtung des Gehäuses (11) verlaufen und dass der Gliedstab (4) zwischen den Erweiterungen (54) aus dem Gehäuse (11) herausfahren kann.

11. Gliedermassstab nach Patentanspruch 2, **dadurch gekennzeichnet, dass** ein erster Anschlag (33) im Bereich des die erste Stim- bzw. Endfläche (32) aufweisenden Endes des Schiebers (12) ausgeführt ist, welcher sich in einem Abstand von der Stimfläche (32) des Schiebers (12) befindet und dass dieser Anschlag (33) als ein sich vom Schiebergrundkörper (31) aufwärts erhebender Vorsprung ausgeführt sein kann, welcher im wesentlichen quaderförmig ist.

12. Gliedermassstab nach Patentanspruch 2, **dadurch gekennzeichnet, dass** eine flach verlaufende Phase (35) im Bereich der Oberseite des Schiebergrundkörpers (31) vorhanden ist, dass diese Phase (35) sich einerseits an die Ablesekante (34) des Schiebers (12) anschliesst, dass sich diese Phase (35) andererseits gegen die erste Endfläche (32) des Schiebers (12) hin erstreckt, und dass ein zweiter Anschlag (36) auf der Oberseite des Schiebergrundkörpers (31) vorhanden sein kann, welcher sich in einem Abstand von der Phase (35) befindet.

13. Gliedermassstab nach Patentanspruch 1, **dadurch gekennzeichnet, dass** die Oberseite des Schiebers (12) eine Fläche (37) aufweist, welche mit Skalen (65,66) versehen ist, und dass sich die jeweilige Skala (65,66) an einen der seitlichen Längsränder (61,62) des Schiebers (12) anschliesst.

## Claims

1. A foldable ruler with an additional measurement device, which is put onto at least one of the sections (4) of the said ruler, that form a package (5), hereby the measurement device (10) includes a slider (12), which itself is located above at least one of the sections (4) and which has two end surfaces (32,34), **characterized in that** the slider (12) has a main body (31), which extends from that one end portion of this section (4), which is lying under the slider (12), up to the second end surface (34) of the slider (12) serving as reading edge of the slider (12), and that the distance between the end surfaces (32,34) of the slider (12) is the same as the distance between the axes of the hinges (8) that link together the individual sections (4) of the package (5) in a foldable manner.

2. A foldable ruler according to claim 1, **characterized in that** the first end surface (32) of the slider (12) is constructed as a front surface, which stands perpendicularly to the longitudinal axis of the slider (12) and which is foreseen as a rest for one of the interior surfaces (3), between which an inside measurement should take place, that during a measurement, the first end surface (32) is outside of the foldable ruler (1), and that the second front, end surface (34) res. of the slider (12), which serves as reading edge, also stands orthogonal to the longitudinal axis L of the slider (12) and is placed over the section (4).

3. A foldable ruler according to claim 1, **characterized in that** the measurement device further includes an elongated casing (11), that this casing (11) shows a first area, which includes a device (20 for clamping of at least one of the sections (4) of the foldable ruler (1) in such a manner that the measurement device can be taken off, and that the casing (11) further shows a second area, which is constructed as a guiding means for the movable slider (12).

4. A foldable ruler according to claim 3, **characterized in that** the cross-section of the base body of the case (13) of the casing (11) is essentially U-shaped, that the limbs of this U-Form represent side walls (14,15) of the casing (11), that webs (41,42,43,44), which connect the side walls (14,15) together, form a ground part of the U-Form, that a window (9) exists in this ground part and that this window (9) is placed in the upper area of the casing (11), i.e. above the slider (12).

5. A foldable ruler according to claim 4, **characterized in that** that one casing area, which includes the clamping device (20), is placed within a first half of the length of the casing (11), that the clamping device (20) includes clamping parts (21,22from which each one is assigned to one of the side walls (14,15) of the casing (11) and that these clamping parts (21,22) are placed in a such a distance from each other, that one of the sections (4) of the foldable ruler (1) may be removable clamped between the clamping parts (21,22).

6. A foldable ruler according to claim 5, **characterized in that** the respective clamping part (21;22) includes a section (23;24) of one of the side walls (14;15), that this wall section (23;24) is springy, that the clamping part (21;22) includes a plate (19), which is carried by the springy wall section (23;24), that this plate (19) is assigned to the inside of the wall sections (23,24), whereby one of the edge parts of this plate (19) extends away from said wall sections (23,24) and that the plate (19) is foreseen for resting on one of the side edges (6;7) of at least one of the sections (4).

7. A foldable ruler according to claim 6, **characterized in that** the end section of the plate (19) of one of the clamping parts (21;22), which is averted from the base body of the case (13), is equipped with a projection (27), that this projection (27) is directed against the projection (27) at the plate (19) of the opposite clamping parts (21;22) and that the distance of the respective projection (27) from the base body of the case (13) is at least as great as the thickness one of the section (4) of the foldable ruler (1).

8. A foldable ruler according to claim 3, **characterized in that** the second area of the casing (11) is placed above the first casing area, that the slider (12) may be moved between the webs (41,42,43, 44) in its longitudinal direction and that the slider (12) is placed above that section (4), on which the measurement device (10) is attached.

9. A foldable ruler according to claim 4, **characterized in that** the base body of the case (13) has the form of a rectangle, that the first area of the measurement device (10), which comprises the clamping parts (21,22), is placed in the area of the first half of the base body (13) of the case and that the second half of the base body (13) of the case extends away from the first half at the side, so that the slider (12) can be drawn out to the side telescopically so far, that the end surface (34) serving as reading edge lies in the inside of the base body (13) of the case.

10. A foldable ruler according to claim 3, **characterized in that** the free end part of that area of the casing (11) of the measurement device (1), in which the clamping device (20 is located, is equipped with extensions (54), that these extensions (54) comprise front edges (49) which are located at that side of the extension (54) which is turned away from the remaining part of the base body (13) of the case, that the front edges (49) are situated perpendicularly to the longitudinal direction of the casing (11) and that the section (4) may move out between the extensions (54) from the casing (11).

11. A foldable ruler according to claim 2, **characterized in that** a first stop (33) is placed **in that** end area, which comprises the first front respectively end surface (32) of the slider (12), that the first stop (33) is situated in a distance of the front surface (32) of the slider (12), and that this stop (33) can be designed as a upward raising extension from the base body (31) of the slider whereby it can have the shape of a cuboid.

12. A foldable ruler according to claim 2, **characterized in that** a flat running chamfer (35) exists in the area of the upper side of the main body (31) of the slider, that this chamfer (35) adjoins to the reading edge (34) of the slider (12) on the one hand and that on the other hand that this chamfer (35) extends against the first end surface (32) of the slider (12), and that there may be a second stop (36) on the upper side of the main body of the slider (31), which is in a distance of the chamfer (35).

13. A foldable ruler according to claim 1, in that the upper side of the slider (12) shows a surface (37), which is equipped with scales (65,66), and that the respective scale (65,66) adjoins to one of the lateral longitudinal edges (61,62) of the slider (12).

## Revendications

1. Mètre pliant comprenant un dispositif de mesure supplémentaire disposé sur au moins une des branches (4) du mètre pliant formant un paquet (5), le dispositif de mesure (10) comprenant un élément coulissant (12) se trouvant au-dessus de l'au moins une branche (4) et présentant deux faces d'extrémité (32, 34), **caractérisé en ce que** l'élément coulissant (12) présente un corps de base (31) qui recouvre la portion de la face supérieure de la branche (4) qui s'étend de la partie d'extrémité de cette branche (4) située sous l'élément coulissant (12) jusqu'à la deuxième face d'extrémité (34) de l'élément coulissant (12) servant de bord de lecture, et **en ce que** la distance entre les faces d'extrémité (32, 34) de l'élément coulissant (12) est égale à la distance séparant les axes des articulations (8) à l'aide desquelles les différentes branches (4) sont articulées entre elles dans le paquet (5).

2. Mètre pliant suivant la revendication 1, **caractérisé en ce que** la première face d'extrémité (32) de l'élément coulissant (12) prend la forme d'une face frontale qui est orientée perpendiculairement à l'axe longitudinal de l'élément coulissant (12) et destinée à venir en appui sur l'une des faces intérieures (3) entre lesquelles doit être prise une mesure intermédiaire, **en ce que** cette première face frontale (32) ressort du mètre pliant (1) lors de la prise d'une mesure, et **en ce que** la seconde face frontale ou d'extrémité (34) de l'élément coulissant (12) qui sert de bord de lecture est elle aussi orientée perpendiculairement à l'axe longitudinal L de l'élément coulissant (12) et se trouve au-dessus de la branche (4).

3. Mètre pliant suivant la revendication 1, **caractérisé en ce que** le dispositif de mesure comprend en outre une armature de forme oblongue (11), **en ce que** cette armature (11) présente une première zone comportant un dispositif (20) de serrage libérable d'au moins l'une des branches (4) du mètre pliant (1), et **en ce que** l'armature (11) présente en outre une seconde zone qui est adaptée au guidage de l'élément coulissant mobile (12).

4. Mètre pliant suivant la revendication 3, **caractérisé en ce que** la section transversale du corps de base (13) de l'armature (11) adopte en substance une forme de U, **en ce que** les ailes de cette forme de U constituent des parois latérales (14, 15) de l'armature (11), **en ce que** des traverses (41, 42, 43, 44) constituent une membrure de la forme en U reliant entre elles les parois latérales (14, 15), **en ce qu'**une fenêtre (9) est prévue dans cette membrure et **en ce que** cette fenêtre (9) se situe dans la zone supérieure de l'armature (11), c'est-à-dire au-dessus de l'élément coulissant (12).

5. Mètre pliant suivant la revendication 4, **caractérisé en ce que** la zone de l'armature comportant le dispositif de serrage (20) est comprise à l'intérieur d'une première moitié de la longueur de l'armature (11), **en ce que** le dispositif de serrage (20) comprend des organes de serrage (21, 22) dont chacun est associé à l'une des parois latérales (14, 15) de l'armature (11), et **en ce que** ces organes de serrage (21, 22) sont espacés les uns des autres d'une distance telle qu'au moins l'une des branches (4) du mètre pliant (1) peut être serrée de manière libérable entre les organes de serrage (21, 22).

6. Mètre pliant suivant la revendication 5, **caractérisé en ce que** chacun des organes de serrage (21, 22) comporte une portion (23 ; 24) comprenant chacune une paroi latérale (14 ; 15), **en ce que** cette portion de paroi (23 ; 24) fait ressort, **en ce que** l'organe de serrage (21 ; 22) comporte encore une plaque (19) qui est supportée par la portion de paroi (23 ; 24) faisant ressort, **en ce que** cette plaque (19) est associée à la face intérieure de la portion de paroi (23, 24), l'une des parties de bord de cette plaque (19) s'écartant de ladite portion de paroi (23, 24), et **en ce que** la plaque (19) est destinée à venir en appui sur l'un des bords latéraux (6 ; 7) d'au moins l'une des branches (4).

7. Mètre pliant suivant la revendication 6, **caractérisé en ce que** la partie d'extrémité de la plaque (19) de l'un des organes de serrage (21 ; 22), partie distante du corps de base (13) de l'armature, est dotée d'un ergot (27), **en ce que** cet ergot (27) est dirigé vers l'ergot (27) prévu sur la plaque (19) de l'organe de serrage (21 ; 22) opposé, et **en ce que** l'écartement entre chaque ergot (27) et le corps de base (13) est au moins aussi grand que l'épaisseur de l'une des branches (4) du mètre (1).

8. Mètre pliant suivant la revendication 3, **caractérisé en ce que** la seconde zone de l'armature (11) se situe au-dessus de la première zone de l'armature, **en ce que** l'élément coulissant (12) est mobile dans le sens de sa longueur entre les traverses (41, 42, 43, 44) et **en ce que** l'élément coulissant (12) se trouve au-dessus de la branche (4) sur laquelle est posé le dispositif de mesure (10).

9. Mètre pliant suivant la revendication 4, **caractérisé en ce que** le corps de base (13) de l'armature présente la forme d'un cadre rectangulaire, **en ce que** la première zone du dispositif de mesure (10) qui comprend les organes de serrage (21 ; 22) se situe dans la région de la première moitié du corps de base (13) de l'armature, et **en ce que** la seconde moitié du corps de base (13) de l'armature s'écarte latéralement de la première moitié, de sorte que l'élément coulissant (12) peut sortir télescopiquement sur le côté jusqu'à ce que la face d'extrémité (34) servant de bord de lecture soit positionnée à l'intérieur du corps de base (13) de l'armature.

10. Mètre pliant suivant la revendication 3, **caractérisé en ce que** la partie d'extrémité libre de chaque zone de l'armature (11) du dispositif de mesure (1) dans laquelle se trouve le dispositif de serrage (20) est pourvue d'élargissures (54), **en ce que** ces élargissures (54) présentent des bords frontaux (49) qui se situent sur la face des élargissures orientée à l'opposé de l'autre partie du corps de base (13) de l'armature, **en ce que** les bords latéraux (49) sont orientés perpendiculairement à la direction longitudinale de l'armature (11), et **en ce que** la branche (4) peut sortir de l'armature (11) entre les élargissures (54).

11. Mètre pliant suivant la revendication 2, **caractérisé en ce qu'**une première butée (33) est prévue dans la zone de l'extrémité de l'élément coulissant (12) présentant la première face frontale ou d'extrémité (32), laquelle butée se trouve espacée de la face frontale (32) de l'élément coulissant (12), et **en ce que** cette butée (33) peut être matérialisée par un ergot en saillie vers le haut sur le corps de base (31) de l'élément coulissant et est sensiblement parallélépipédique.

12. Mètre pliant suivant la revendication 2, **caractérisé en ce qu'**une plage plate (35) est prévue dans la zone de la face supérieure du corps de base (31) de l'élément coulissant, **en ce que** cette plage (35) se rattache d'une part au bord de lecture (34) de l'élément coulissant (12), **en ce que** cette plage (35) s'étend d'autre part jusqu'à la première face d'extrémité (32) de l'élément coulissant (12), et **en ce qu'**une deuxième butée (36) peut être prévue à une certaine distance de la plage (35) sur la face supérieure du corps de base (31) de l'élément coulissant.

13. Mètre pliant suivant la revendication 1, **caractérisé en ce que** la face supérieure de l'élément coulissant (12) présente une surface (37) munie d'une graduation (65, 66), et **en ce que** les différentes graduations (65, 66) sont rattachées à l'un des bords longitudinaux latéraux (61, 62) de l'élément coulissant (12).
